# EUROPÄISCHE PATENTSCHRIFT

(11) **EP 0 790 370 B1**
(45) Veröffentlichungstag und Bekanntmachung des Hinweises auf die Patenterteilung: **26.01.2000**
(21) Anmeldenummer: 96119837.1
(22) Anmeldetag: 11.12.1996
(51) Int. Cl.: E04F 13/14, C04B 24/26, C04B 40/06, B32B 17/06

(54) **Halbzeug-Bauelement für die Verkleidung von Oberflächen**
Half-product building element for coating surfaces
Elément de construction semi-fini pour le revêtement de surfaces

(30) Priorität: 16.02.1996 DE 19605806; 10.08.1996 DE 19632353
(43) Veröffentlichungstag der Anmeldung: 20.08.1997
(73) Patentinhaber: Böe, Hans Peter, 46049 Oberhausen (DE)
(72) Erfinder: Böe, Hans Peter, 46049 Oberhausen (DE)
(74) Vertreter: Honke, Manfred, Dr.-Ing.

(56) Entgegenhaltungen:
- EP-A- 0 722 027
- DE-C- 4 432 051
- FR-A- 778 858
- GB-A- 2 107 211
- DATABASE WPI Week 9527 Derwent Publications Ltd., London, GB; AN 95-204541 XP002031408 & JP 07 119 262 A (MIYAI)
- CHEMICAL ABSTRACTS, vol. 90, no. 22, 28.Mai 1979 Columbus, Ohio, US; abstract no. 173643y, W. RUTLEDGE: Seite 325; XP000183278 & CA 1 046 361 A (ID.)
- DATABASE WPI Week 8546 Derwent Publications Ltd., London, GB; AN 85-286173 XP002031409 & JP 60 195 049 A (MARINAX P D)

## Beschreibung

Die Erfindung betrifft ein Halbzeug-Bauelement, welches für die Verkleidung von Oberflächen eingerichtet ist. - Bei den Oberflächen kann es sich um innenseitige oder außenseitige Oberflächen von Bauwerken, z. B. eines Hauses, um Wandoberflächen und dergleichen handeln. Die Oberfläche kann aber auch die eines anderen Halbzeugs sein, beispielsweise einer Stahlplatte, einer Blechplatte, einer Zementfaserplatte, einer Holzwerkstoffplatte in Form einer Faserplatte oder einer Spanplatte oder auch einer Dämmstoffplatte sein. Der Zweck der Verkleidung ist beliebig. Es kann sich um dekorative Verkleidungen handeln oder auch um Verkleidungen, die zum Zwecke des Korrosionsschutzes angebracht werden. Es kann sich auch um eine Betonplatte handeln. Die Oberfläche kann als ebene Oberfläche ausgeführt sein, sie kann aber auch einfach oder doppelt gekrümmt gestaltet sein. Es versteht sich, daß das Halbzeug-Bauelement, dann, wenn es sich um die Verkleidung einer gekrümmten Oberfläche handelt, mit der gleichen Krümmung, wie die der Oberfläche versehen sein muß.

Halbzeug-Bauelemente, welche zur Verkleidung von Oberflächen eingerichtet sind, sind an sich bekannt. Zum Beispiel kennt man Mosaiksteine, die auf einem Flächenprodukt befestigt sind, welches auf seiner den Mosaiksteinen abgewandten Seite eine Kleberschicht aufweist, die von einer Schutzhaut abgedeckt ist. Wird die Schutzhaut abgezogen, so können die Mosaiksteine gegen eine Wand oder dgl. geklebt werden. Ohne weiteres ist es jedoch bis heute nicht möglich, daß Glasscheiben in Form von Floatglasscheiben, vorgespannten Glasscheiben, Isolierglaseinheiten oder Sicherheitsglaseinheiten ohne weiteres an einer zu verkleidenden Oberfläche zu befestigen. Für die Befestigung sind vielmehr besondere Technologien erforderlich.

Zur Herstellung eines vorgefertigten Bauwerkes ist es ferner bekannt (vgl. die zum Stand der Technik nach Art. 54 (3) EPÜ gehörende EP 0 700 776 A2), eine Glasscheibe mit einer einseitigen Verbundmörtelschicht, die aus einem feinteiligen neutralen Zuschlagstoff, Zement und einer wässrigen Dispersion eines Polyacrylsäurederivates angemahnt ist, welches ein logarithmisches Dekrement, bestimmt nach DIN 53445, aufweist, welches bei Celsiustemperaturen von unter 0°C ein Maximum besitzt, und die mit Mangel an Hydratationswasser erhärtet ist, gleichsam als verlorene Schalung mit flüssigem Beton in Verbund zu bringen, wobei sich der Beton im Zuge seiner Erhärtung monolithisch mit der Verbundmörtelschicht der Glasscheibe verbindet.

Auch ist es bekannt (DATABASE WPJ Week 8546 Derwent Publications Ltd., London, GB; AN 85-286173 XP 002031409 JP 60 195 049 A MARINAX P D), eine Zusammensetzung mit 5 bis 7 Gew.-% einer wässrigen Polyacryldispersion und 23 bis 38 Gew.-% Portlandzement zum Beschichten von Blöcken und Platten aus Beton, Metall Glas oder Wolle zu verwenden; der Zweck der Beschichtung ist aber offen gelassen.

Der Erfindung liegt das technische Problem zugrunde, für die Verkleidung von Oberflächen mit Glasscheiben zu arbeiten, die auf einfache Weise als Verkleidungselement angebracht werden können.

Zur Lösung dieses technischen Problems ist Gegenstand der Erfindung ein Halbzeug-Bauelement, welches für die Verkleidung von Oberflächen eingerichtet ist, bestehend aus einer Glasscheibe und einer Verbundmörtelschicht auf einer Seite der Glasscheibe, welche Verbundmörtelschicht aus einem feinteiligen neutralen Zuschlagstoff und Zement besteht und mit einer wässrigen Dispersion eines Polyacrylsäurederivates angemacht ist, wobei das Polyacrylsäurederivat ein logarithmisches Dekrement der Torsionsschwingungsdämpfung, bestimmt nach DIN 53445, aufweist, welches bei Celsiustemperaturen von unter 0°C ein Maximum aufweist und bei der der Verbundmörtel auf der Glasscheibe mit Mangel an Hydratationswasser erhärtet ist, wobei der Verbund mit der zu verkleidenden Oberfläche durch den Kontakt der Verbundmörtelschicht mit eines sogenannten Fliesenklebers oder sonstigen Betonklebers herstellbar ist.

Bei den bekannten Maßnahmen zur Verkleidung der Oberfläche eines Bauwerkes mit Glasscheiben wird zunächst der Betonkörper hergestellt, regelmäßig also der Beton in eine entsprechende Schalungsform gegossen und wird zunächst das Erhärten des Betons abgewartet. Erst nach dem Erhärten des Betons wird der Betonkörper mit einer oder mehreren Glasscheiben versehen. Diesbezüglich ist es bekannt, die Glasscheiben mit mechanischen Hilfsmitteln auf dem Betonkörper zu befestigen. Diese mechanische Befestigung ist sehr aufwendig. Im übrigen kann sich im Zwischenraum von Glasscheiben und Betonkörper leicht unerwünschte Feuchtigkeit, beispielsweise Kondenswasser, ansammeln. Weiterhin ist es bekannt, die Glasscheiben durch Kleben, beispielsweise mittels eines Kunstharzklebers, auf einem Betonkörper zu befestigen. Auch solche Montagen sind aufwendig. Insbesondere stört, daß die gefahrenfreie Standzeit einer solchen Glasscheibe, die auf eine Betonoberfläche aufgeklebt ist, verhältnismäßig gering ist. Bei einer Befestigung mit Hilfe eines Kunstharzklebers kann dieser Kleber altern und dadurch versagen, je nach den klimatischen Verhältnissen oft in verhältnismäßig kleinen Zeitspannen. Dadurch lösen sich die Glasscheiben, zumindest bereichsweise, vorzeitig. Insoweit ist es schwierig, die Sicherheitsvorschriften zu erfüllen, die die Zulassungsbehörden erlassen haben. Demgegenüber bereiten die erfindungsgemäßen Halbzeug-Bauelemente keine Probleme.

Es ist weiterbin bekannt (AT-PS 196 079), farbige mit einer Haftschicht versehene Verkleidungsplatten aus Glas herzustellen. Hier wird auf die Glasplatte zur gleichzeitigen Bildung der Haft- und Farbschicht eine etwa 15 bis 20%-ige, Festkörper enthaltende wässrige Kunstharzdispersion aus Polyvinylacetat mit Zusatz eines Weichmachers und eines Farbstoffes aufgespritzt. Auf diese erste Schicht wird Sand aufgestreut, um die Kunstharzschicht vor Beschädigungen, z. B. während des Transportes, zu schützen. Die Sandschicht dient auch dazu, die Haftfestigkeit der Glasplatte an dem Zementmörtel sicherzustellen, mit dem die Platten schließlich an einer Wand befestigt werden. Die insoweit bekannten Maßnahmen sind aufwendig, zumal auf die Glasplatte verschiedene Schichten aufgetragen werden müssen. Außerdem ist auch hier die Haftung der Kritik offen.

Im Rahmen der Erfindung bestehen mehrere Möglichkeiten der weiteren Ausbildung und Gestaltung der Halbzeug-Bauelemente. Nach bevorzugter Ausführungsform der Erfindung weisen die Glasscheiben eine Dicke von 4 mm und mehr auf, vorzugsweise eine Dicke von etwa 4 bis 8 mm. Die Glasscheiben können aus nicht vorgespanntem, vorzugsweise aber aus vorgespanntem Glas bestehen. Dabei kann es sich um einfache und um Verbundglasscheiben handeln. Nach bevorzugter Ausführungsform der Erfindung sind die Glasscheiben als Float-Glasscheiben ausgeführt. Es liegt auch im Rahmen der Erfindung, daß die Glasscheiben mit einer Siebdruckschicht versehen werden, auf welche Siebdruckschicht der Verbundmörtel aufgebracht wird. Auch bei zwischengeschalteter Siebdruckschicht haftet der Verbundmörtel ausreichend fest an der Glasscheibe. Die maximale Größe der Glasscheiben soll im Bereich von 4000 mmm x 4000 mm liegen. Die Glasscheibe kann auch eine Isolierglaseinheit sein. Im Rahmen der Erfindung liegt es auch, die Glasscheibe als Solarelement in Form einer Solarglasscheibe auszuführen.

Mörtel meint im Rahmen der Erfindung einen Bindebaustoff für den Verbund zwischen Glasscheibe und Beton. Die Beschichtung aus dem Mörtel kann im Spritz-, Roll-, Spachtel- oder ähnlichen Verfahren auf die Glasscheibe aufgetragen werden. Erhärten des Mörtels meint "ausreichende" Erhärtung. Die Schicht aus Verbundmörtel darf nicht zu steif oder zu starr sein. Auf diese Weise bleibt die aufgebrachte Schicht aus Mörtel über lange Zeiträume fähig, sich mit frischem, noch nicht erhärtetem Beton zu verbinden. Zu einer optimalen Verbindung mit dem Beton trägt auch das beigegebene Polyacrylsäurederivat bei. Nach bevorzugter Ausführungsform der Erfindung weist die Verbundmörtelschicht eine Schichtdicke von 2 bis 7 mm, vorzugsweise 4 bis 6 mm, auf.

Vorzugsweise weist der Verbundmörtel einen feinteiligen neutralen Zuschlagstoff der Körnung von 0,1 bis 1 mm, vorzugsweise 0,2 bis 0,7 mm, auf. Zweckmäßigerweise wird Quarzsand oder auch Glasmehl als feinteiliger neutraler Zugschlagstoff verwendet. Nach bevorzugter Ausführungsform der Erfindung ist der Zement Portlandzement. Es liegt im Rahmen der Erfindung, daß der Zement, vorzugweise Portlandzement, angefärbt wird. Auf diese Weise lassen sich im Falle der Verwendung von durchsichtigen Glasscheiben farbige Fassaden mit besonderer ästhetischer Wirkung herstellen.

Polyacrylsäurederivate meint im Rahmen der Erfindung insbesondere Polymere auf Basis von Acrylaten, d. h. Acrylsäureestern und ihren Derivaten, Acrylsäure oder Acrylnitril als charakteristischen Kettenbaustein. Das Polyacrylsäurederivat kann auch als Copolymer ausgeführt sein, in dem insbesondere Acrylate, Acrylsäure oder Acrylnitril als Comonomere eingesetzt sind. Auch Methacrylsäure und ihre Derivate sind als Comonomer möglich. Es liegt auch im Rahmen der Erfindung, daß das Polyacrylsäurederivat gemäß Patentanspruch 1 als Polymerengemisch verschiedener Polyacrylsäurederivate ausgeführt ist. Nach bevorzugter Ausführungsform der Erfindung, der im Rahmen der Erfindung besondere Bedeutung zukommt, ist das Polyacrylsäurederivat eine Polyacrylat, vorzugsweise ein Acrylharz. Es liegt im Rahmen der Erfindung, daß Polyacrylat-Klebstoffe in den Verbundmörtel eingemischt werden. Nach bevorzugter Ausführungsform der Erfindung ist das Polyacrylsäurederivat, vorzugsweise Polyacrylat, ein Copolymer mit Acrylnitril als Comonomer. Zweckmäßig beträgt dabei der Anteil des Acrylnitrilcomonomeren bezogen auf das Polyacrylsäurederivat, vorzugsweise Polyacrylat, zumindest 2 Gew.-%. Der Verbundmörtel wird mit einer wässrigen Dispersion, beispielsweise einer wässrigen Emulsion, des Polyacrylsäurederivats angemacht.

Erfindungsgemäß weist das Polyacrylsäurederivat ein logarithmisches Dekrement, bestimmt nach DIN 53445, auf, welches bei Celsiustemperaturen von unter 0° ein Maximum aufweist. Hierbei handelt es sich um das logarithmische Dekrement der Torsionsschwingungsdämpfung beim Torsionsschwingungsversuch nach DIN 53445 mit dem Polyacrylsäurederivat als Probekörper. Vorzugsweise wird ein Polyacrylsäurederivat eingesetzt, dessen logarithmisches Dekrement bei Celsiustemperaturen von über -8° C ein Maximum aufweist. Es ist bekannt (siehe beispielsweise DE-PS 28 27 382), in einem Bindemittel zur Herstellung von Beton oder Mörtel einen Kunststoff einzusetzen, dessen logarithmisches Dekrement, bestimmt nach DIN 53445, bei Celsiustemperaturen von unter -8° C ein Maximum durchläuft. Ziel dieser Maßnahmen ist es, Baustoffmischungen für Bauteile und Beläge zu schaffen, die Temperaturen von unter 0° C ausgesetzt sind und die nichtsdestoweniger eine ausreichende Elastoplastizität und eine vorteilhafte Schlagdämpfung und Abriebfestigkeit aufweisen sollen.

Der Erfindung liegt die Erkenntnis zugrunde, daß ein Polyacrylsäurederivat, dessen logarithmisches Dekrement nach DIN 53445 bei Celsiustemperaturen von unter 0° ein Maximum aufweist, überraschenderweise nicht nur im Temperaturbereich von unter 0° C, sondern insbesondere im Bereich von -50° C bis +200° C als effektiver Verbundvermittler im Rahmen des erfindungsgemäßen Verbundmörtels zwischen Glasscheibe und Verbundmittelbeschichtung einerseits sowie zwischen Betonkörper und Verbundmittelbeschichtung andererseits, wirkt. Selbst bei einer Temperatur von 300° C ist ein allmähliches Nachlassen der Haftwirkung erst bei einer Temperaturbeaufschlagungszeitspanne von über 30 Minuten zu beobachten. Überraschenderweise beeinträchtigen auch relativ hohe Temperaturen, wie sie z. B. bei starker Sonneneinstrahlung oder in Brandfällen auftreten, die feste Haftung der Glasscheiben an dem Betonkörper nicht. Insofern ist die effektive Haftung gegenüber klimatischen Veränderungen und Wärmedehnungen der Glasscheibe unempfindlich. Der Fachmann konnte aber nicht erwarten, daß einerseits eine so feste und wärmeempfindliche Verbindung zwischen der Beschichtung und der Glasscheibe erreicht wird, daß aber andererseits auch Wärmedehnungen der Glasscheibe ohne Rißbildungen möglich sind.

Das erfindungsgemäße Halbzeug-Bauelement zeichnet sich im übrigen durch hervorragende Dichtigkeit bezüglich des Eindringens von Flüssigkeiten und Gasen aus. Insoweit eignen sich die Halbzeug-Bauelemente auch insbesondere als Verkleidung zum Schutz von Bauwerken gegen nachteilhafte Einwirkungen von Flüssigkeiten und/oder Gasen.

Der feste Verbund zwischen der Beschichtung und der Glasscheibe wird offenbar durch eine molekulare Wechselwirkung des Polyacrylsäurederivats mit dem Glas erreicht. Es wird davon ausgegangen, daß durch den Zement in dem Verbundmörtel, insbesondere durch alkalische Bestandteile des Zementes, die Glasoberfläche gleichsam mikroskopisch aufgerauht wird, so daß eine größere Oberfläche für eine Wechselwirkung mit den molekularen Komponenten des Polyacrylsäurederivats entsteht. Bei dieser Aufrauhung können sich in der Glasoberfläche freie Silanolgruppen bilden, die zu chemischen und/oder physikalischen Wechselwirkungen mit den funktionellen Gruppen der Acrylsäuremonomereinheiten fähig sind. Vermutlich bilden sich hier relativ feste Wasserstoffbrückenbindungen zwischen diesen funktionellen Gruppen und den Silanolgruppen der Glasoberfläche aus. Daß derartig effektive physikochemische Wechselwirkungen zwischen einem organischen Polyacrylpolymer und dem anorganischen Glasmaterial möglich sind und daß hierdurch eine derart feste Haftung der Glasscheibe erzielbar ist, konnte der Fachmann aber nicht erwarten. Trotz dieser festen Haftung zwischen Glasscheibe und Beschichtung greift der Verbundmörtel die Glasscheibe überraschenderweise nicht sichtbar an. Besondere Bedeutung kommt im Rahmen der Erfindung einer Ausführungsform zu, bei der der Verbundmörtel Portlandzement als Zement enthält und mit einer wässrigen Dispersion eines Polyacrylates angemacht ist, welches Polyacrylat ein Copolymer mit Acrylnitril als Comonomer ist. Es wird davon ausgegangen, daß die alkalischen Komponenten des Portlandzementes die Oberfläche der Glasscheibe anätzen und somit besonders wirksam mikroskopisch aufrauhen, so daß eine sehr ausgeprägte Wechselwirkung zwischen der Glasoberfläche bzw. darin gebildeten Silanolgruppen und den Carboxyl- und/oder Nitrilgruppen des Polyacrylatcopolymers stattfinden kann. Besonders gute Ergebnisse erreicht man mit Glasscheiben aus Float-Glas.

Das Polyacrylsäurederivat gemäß Patentanspruch 1 erlaubt es, den Verbundmörtel durch seinen Anteil an dem Polyacrylsäurederivat und die Dicke der Beschichtung so einzustellen, daß er im erhärteten Zustand Wärmedehnungen der Glasscheibe rißfrei mitmacht. Das Polyacrylsäurederivat verleiht dem Verbundmörtel der Beschichtung die Elastizität, die erforderlich ist, damit die Beschichtung die Wärmedehnungen rißfrei mitmachen kann. Nach bevorzugter Ausführungsform der Erfindung enthält die wässrige Dispersion des Polyacrylsäurederivats 50 - 65 Gew.-%, vorzugsweise 55 - 60 Gew.-% des Polyacrylsäurederivats und 35 - 50 Gew.-%, vorzugweise 40 bis 45 Gew.-% Wasser. Wird ein Polyacrylat im Rahmen der Erfindung eingesetzt, so zeichnet sich das erfindungsgemäß hergestellte Bauwerk durch ein besonders gutes Langzeitverhalten aus. Gemäß bevorzugter Ausführungsform der Erfindung hat sich ein Verbundmörtel bewährt, der mit folgendem Mischungsverhältnis an; gemacht ist:

| | |
|---|---|
| feinteilige neutrale Zuschlagstoffe | 10 bis 40 Gew.-% |
| Zement | 10 bis 40 Gew.-% |
| wässrige Dispersion des Polyacrylsäurederivats | 10 bis 40 Gew.-%. |

Es versteht sich, daß sich die Gewichtsprozentanteile im Rahmen einer erfindungsgemäßen Mischung jeweils zu 100 Gew.-% addieren.

Vorzugsweise ist der Verbundmörtel mit einem Mischungsverhältnis von 25 bis 35 Gew.-% an feinteiligem neutralen Zuschlagstoff, 25 bis 35 Gew.-% an Zement und 25 bis 35 Gew.-% der wässrigen Dispersion des Polyacrylsäurederivats angemacht. Wie bereits erwähnt, ist die Menge an Hydratationswasser in dem Verbundmörtel stets so eingestellt, daß der Verbundmörtel auf der Glasscheibe mit Mangel an Hydratationswasser erhärtet. Es versteht sich, daß die Beschichtung der Glasscheiben eine solche Dicke aufweist, daß zum Betonkörper hin ein ausreichender Spannungsabbau erfolgt, wenn die Glasscheiben eine beachtliche Wärmedehnung erfahren, die Wärmedehnung des Betonkörpers an sich demgegenüber aber gering ist. Bezüglich der einzustellenden Dicke der Beschichtung hat sich eine Ausführungsform der Erfindung bewährt, bei der die Verbundmörtelschicht eine Schichtdicke von 2 bis 7 mm, vorzugsweise 4 bis 6 mm aufweist.

Die Erfindung geht von der Erkenntnis aus, daß bei einer Glasscheibe eine Beschichtung aus einem Verbundmörtel des beschriebenen Aufbaus einerseits mit der Oberfläche der Glasscheibe wirksam und dauerhaft verbunden werden kann während andererseits die Beschichtung durch elastische Verformung und folglich rißfrei den Wärmedehnungen der Glasscheiben folgen kann. Die Erfindung geht fernerhin von der Erkenntnis aus, daß überraschenderweise eine Beschichtung aus einem solchen Verbundmörtel über einen Fliesen- oder Betonkleber eine unerwartet feste Haftung mit dem Untergrund eingeht. Die Glasscheibe kann auf diese Weise langfristig und ohne die Haltbarkeit beeinträchtigende mechanische Zwänge am Untergrund haften bleiben.

Es liegt auch im Rahmen der Erfindung, daß die erfindungsgemäße Verbundmörtelschicht auf beiden Seiten der Glasscheibe aufgebracht wird. Bei dieser Ausführungsform der Erfindung wird das Halbzeug-Bauelement gleichsam als Verbindungsschicht und/oder Abdichtungsschicht zwischen zwei den beiden Seiten der Glasscheibe zugeordneten Oberflächen eingebracht, wobei die beiden Oberflächen mit den beiden Verbundmörtelschichten des Halbzeug-Bauelementes in Kontakt gebracht werden. Dieses mit zwei Verbundmörtelschichten versehene Halbzeug-Bauelement kann in vorteilhafter Weise zur Abdichtung zwischen zwei Oberflächen eingesetzt werden. Vorzugsweise wird dieses Halbzeug-Bauelement zwischen einer Betonoberfläche und einer Betumenoberfläche als Abdichtungselement eingesetzt. Die hierbei zwischen den einzelnen Halbzeug-Bauelementen entstehenden Fugen können in vorteilhafter Weise durch die fugenüberfassenden Streifen des Halbzeug-Bauelementes abgedichtet werden.

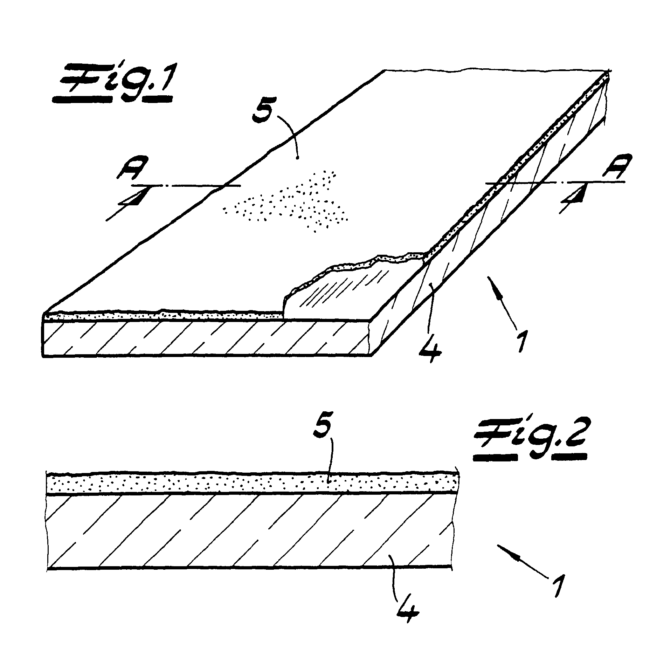

Im folgenden wird die Erfindung anhand einer lediglich ein Ausführungsbeispiel darstellenden Zeichnung ausführlicher erläutert. Es zeigen in schematischer Darstellung
- Fig. 1: die Ansicht eines erfindungsgemäßen Halbzeug-Bauelementes, ausschnittsweise und zum Teil aufgebrochen und
- Fig. 2: einen Schnitt in Richtung A-A durch den Gegenstand nach Fig. 1 in vergrößertem Maßstab.

Das in den Figuren ausschnittsweise dargestellte Halbzeug-Bauelement 1 ist für die Verkleidung von Oberflächen eingerichtet. Es kann sich um ebene oder gekrümmte oberflächen, z. B. eine Betonwand oder eine Stahlwand, handeln. Handelt es sich um gekrümmte Oberflächen, so ist das Halbzeug-Bauelement 1 entsprechend den Oberflächen gekrümmt.

Das Halbzeug-Bauelement 1 besteht in seinem grundsätzlichen Aufbau aus einer Glasscheibe 4 und einer Verbundmörtelschicht 5. Die Verbundmörtelschicht 5 ist besonders aufgebaut, und zwar so, wie es sich aus dem Patentanspruch 1 und den auf die Verbundmörtelschicht gerichteten nachgeordneten Patentansprüchen ergibt. Der Verbundmörtel ist durch seinen Anteil an dem Polyacrylsäurederivat und durch die Dicke der Beschichtung so eingestellt, daß Wärmedehnungen der Glasscheibe 4 von der Verbundmörtelschicht 5 rißfrei mitgemacht werden und unterschiedliche Wärmedehnungen zwischen der Glasscheibe 4 und dem Bauteil 3, dem die Oberfläche 2 angehört, ausgeglichen werden.

Das Halbzeug - Bauelement 1 wird mit seiner Verbundmörtelschicht 5 mit Hilfe eines Fliesen- oder Betonklebers an der zu verkleidenden Oberfläche befestigt.

## Patentansprüche

1. Halbzeug-Bauelement, welches für die Verkleidung von Oberflächen eingerichtet ist, bestehend aus
einer Glasscheibe und einer Verbundmörtelschicht auf einer Seite der Glasscheibe, welche Verbundmörtel schicht aus einem feinteiligen neutralen Zuschlag stoff und Zement besteht und mit einer wässrigen Dispersion eines Polyacrylsäurederivates angemacht ist, wobei das Polyacrylsäurederivat ein logarithmisches Dekrement der Torsionsschwingungsdämpfung, bestimmt nach DIN 53445, aufweist, welches bei Celsiustemperaturen von unter 0°C ein Maximum besitzt, und der Verbundmörtel auf der Glasscheibe mit Mangel an Hydratationswasser erhärtet ist,
wobei der Verbund mit der zu verkleidenden Oberfläche durch den Kontakt der Verbundmörtelschicht des Halbzeug-Bauelementes mit angemachtem und erhärtendem Beton oder mit Hilfe eines sogenannten Fliesenklebers herstellbar ist.

2. Halbzeug-Bauelement nach Anspruch 1, wobei die Glasscheiben eine Dicke von 4 mm und mehr aufweisen, vorzugsweise eine Dicke von etwa 4 bis 8 mm.

3. Halbzeug-Bauelement nach einem der Ansprüche 1 oder 2, wobei die Glasscheibe vorgespannt ist.

4. Halbzeug-Bauelement nach einem der Ansprüche 1 bis 3, wobei die Glasscheibe als Float-Glasscheibe ausgeführt ist.

5. Halbzeug-Bauelement nach einem der Ansprüche 1 bis 4, wobei die Verbundmörtelschicht eine Schichtdicke von 2 bis 7 mm, vorzugsweise 4 bis 6 mm, aufweist.

6. Halbzeug-Bauelement nach einem der Ansprüche 1 bis 5, wobei der Verbundmörtel einen feinteiligen neutralen Zuschlagstoff der Körnung von 0,1 bis 1 mm, vorzugsweise 0,2 bis 0,7 mm, aufweist.

7. Halbzeug-Bauelement nach einem der Ansprüche 1 bis 6, wobei der Zement Portlandzement ist.

8. Halbzeug-Bauelement nach einem der Ansprüche 1 bis 7, wobei das Polyacrylsäurederivat ein Polyacrylat, vorzugsweise ein Acrylharz, ist.

9. Halbzeug-Bauelement nach einem der Ansprüche 1 bis 8, wobei das Polyacrylsäurederivat ein Copolymer mit Acrylnitril als Comonomer ist.

10. Halbzeug-Bauelement nach Anspruch 9, wobei der Anteil des Acrylnitrilcomonomeren bezogen auf das Polyacrylsäurederivat zumindest 2 Gew.-% beträgt.

11. Halbzeug-Bauelement nach einem der Ansprüche 1 bis 10, wobei die wässrige Dispersion des Polyacrylsäurederivates 50 - 65 Gew.-%, vorzugsweise 55 - 60 Gew.-% des Polyacrylsäurederivates und 35 - 50 Gew.-%, vorzugsweise 40 bis 45 Gew.-% Wasser enthält.

12. Halbzeug-Bauelement nach einem der Ansprüche 1 bis 11, wobei der Verbundmörtel mit folgendem Mischungsverhältnis angemacht ist:
| | |
|---|---|
| feinteilige neutrale Zuschlagstoffe | 10 bis 40 Gew.-% |
| Zement | 10 bis 40 Gew.-% |
| wässrige Dispersion des Polyacrylsäurederivates | 10 bis 40 Gew.-%. |

13. Halbzeug-Bauelement nach einem der Ansprüche 1 bis 12, wobei der Verbundmörtel mit einem Mischungsverhältnis von vorzugsweise 25 bis 35 Gew.-% an feinteiligem neutralen Zuschlagstoff, 25 bis 35 Gew.-% an Zement und 25 bis 35 Gew.-% der wässrigen Dispersion des Polyacrylsäurederivats angemacht ist.

14. Halbzeug-Bauelement nach einem der Ansprüche 1 bis 13, wobei die Verbundmörtelschicht auf der Glasscheibe einen Anteil an Polyacrylsäurederivat einerseits und eine Beschichtungsdicke andererseits so aufweist, daß die Verbundmörtelschicht Wärmedehnungen der Glasscheibe rißfrei mitmacht.

## Claims

1. A semi-finished building element product which is designed for the cladding of surfaces, consisting of
a glass sheet and a composite mortar layer on one side of the glass sheet, which composite mortar layer consists of a finely divided neutral aggregate and cement and which is mixed with an aqueous dispersion of a polyacrylic acid derivative, wherein the polyacrylic acid derivative exhibits a logarithmic decrement of the damping of torsional vibrations, as determined according to DIN 53445, which has a maximum at Celsius temperatures below 0°C, and the composite mortar is set on the glass sheet with a deficit of water of hydration,
wherein the bond with the surface to be clad can be produced by the contact of the composite mortar layer of the semi-finished building element product with mixed, setting concrete or with the aid of what is termed a tile adhesive.

2. A semi-finished building element product according to claim 1, wherein the glass sheets have a thickness of 4 mm or more, preferably a thickness of about 4 to 8 mm.

3. A semi-finished building element product according to either one of claims 1 or 2, wherein the glass sheet is prestressed.

4. A semi-finished building element product according to any one of claims 1 to 3, wherein the glass sheet is produced as a float glass sheet.

5. A semi-finished building element product according to any one of claims 1 to 4, wherein the composite mortar layer has a layer thickness of 2 to 7 mm, preferably 4 to 6 mm.

6. A semi-finished building element product according to any one of claims 1 to 5, wherein the composite mortar comprises a finely divided neutral aggregate with a particle size distribution of 0.1 to 1 mm, preferably 0.2 to 0.7 mm.

7. A semi-finished building element product according to any one of claims 1 to 6, wherein the cement is portland cement.

8. A semi-finished building element product according to any one of claims 1 to 7, wherein the polyacrylic acid derivative is a polyacrylate, preferably an acrylic resin.

9. A semi-finished building element product according to any one of claims 1 to 8, wherein the polyacrylic acid derivative is a copolymer comprising acrylonitrile as a comonomer.

10. A semi-finished building element product according to claim 9, wherein the proportion of acrylonitrile comonomer is at least 2 % by weight with respect to the polyacrylic acid derivative.

11. A semi-finished building element product according to any one of claims 1 to 10. wherein the aqueous dispersion of the polyacrylic acid derivative contains 50 - 65 % by weight, preferably 55 - 60 % by weight, of the polyacrylic acid derivative, and 35 - 50 % by weight, preferably 40 to 45 % by weight, of water.

12. A semi-finished building element product according to any one of claims 1 to 11, wherein the composite mortar is mixed in the following mixture ratio:
| | |
|---|---|
| finely divided neutral aggregate | 10 to 40 % by weight |
| cement | 10 to 40 % by weight |
| aqueous dispersion of polyacrylic acid derivative | 10 to 40 % by weight. |

13. A semi-finished building element product according to any one of claims 1 to 12, wherein the composite mortar is preferably mixed at a mixture ratio of 25 to 35 % by weight of finely divided neutral aggregate, 25 to 35 % by weight of cement and 25 to 35 % by weight of the aqueous dispersion of the polyacrylic acid derivative.

14. A semi-finished building element product according to any one of claims 1 to 13, wherein the composite mortar layer on the glass sheet firstly has a content of polyacrylic acid derivative and secondly has a coating thickness such that the composite mortar layer permits thermal expansion of the glass sheet without cracking.

## Revendications

1. Élément de construction semi-fini conçu pour l'habillage de surfaces, constitué de
une plaque de verre et une couche de mortier composite déposée sur une face de la plaque de verre, ladite couche de mortier composite étant constituée d'un agrégat neutre à grain fin et de ciment et étant gâchée avec une dispersion aqueuse d'un dérivé de l'acide polyacrylique, le dérivé de l'acide polyacrylique présentant un décrément. logarithmique de l'amortissement de l'oscillation de torsion déterminé selon DIN 53445, lequel possède un maximum à des températures Celsius inférieures à 0 °C, et le mortier composite ayant pris sur la plaque de verre avec un déficit en eau d'hydratation,
dans lequel la liaison avec la surface à habiller est réalisée par le contact de la couche de mortier composite de l'élément de construction semi-fini avec du béton gaché et en cours de prise ou à l'aide d'un adhésif pour dalles.

2. Élément de construction semi-fini selon la revendication 1, dans lequel les plaques de verre présentent une épaisseur de 4 mm et plus, de préférence une épaisseur d'environ 4 à 8 mm.

3. Élément de construction semi-fini selon l'une des revendications 1 ou 2, dans lequel la plaque de verre est précontrainte.

4. Élément de construction semi-fini selon l'une des revendications 1 à 3, dans lequel la plaque de verre est conformée en plaque de verre flotté.

5. Élément de construction semi-fini selon l'une des revendications 1 à 4, dans lequel la couche de mortier composite présente une épaisseur de couche de 2 à 7 mm, de préférence de 4 à 6 mm.

6. Élément de construction semi-fini selon l'une des revendications 1 à 5, dans lequel le mortier composite comporte un agrégat neutre à grain fin d'une granulométrie de 0,1 à 1 mm, de préférence de 0,2 à 0,7 mm.

7. Élément de construction semi-fini selon l'une des revendications 1 à 6, dans lequel le ciment est du ciment Portland.

8. Élément de construction semi-fini selon l'une des revendications 1 à 7, dans lequel le dérivé de l'acide polyacrylique est un polyacrylate, de préférence une résine acrylique.

9. Élément de construction semi-fini selon l'une des revendications 1 à 8, dans lequel le dérivé de l'acide polyacrylique est un copolymère avec de l'acrylonitrile comme comonomère.

10. Élément de construction semi-fini selon la revendication 9, dans lequel la proportion de comonomère acrylonitrile par rapport au dérivé de l'acide polyacrylique est égale à au moins 2 % en poids.

11. Élément de construction semi-fini selon l'une des revendications 1 1 à 10, dans lequel la dispersion aqueuse du dérivé de l'acide polyacrylique contient de 50 à 65 % en poids, de préférence de 55 à 60 % en poids de dérivé de l'acide polyacrylique, et de 35 à 50 % en poids, de préférence de 40 à 45 % en poids d'eau.

12. Élément de construction semi-fini selon l'une des revendications 1 à 11, dans lequel le mortier composite est gâché selon le rapport de mélange suivant :
| | |
|---|---|
| agrégats neutres à grain fin | 10 à 40 % en poids |
| ciment | 10 à 40 % en poids |
| dispersion aqueuse du dérivé de l'acide polyacrylique | 10 à 40 % en poids |

13. Élément de construction semi-fini selon l'une des revendications 1 à 12, dans lequel le mortier composite est gâché selon un rapport de mélange, de préférence, de 25 à 35 % en poids d'agrégat neutre à grain fin, de 25 à 35 % en poids de ciment, et de 25 à 35 % en poids de dispersion aqueuse du dérivé de l'acide polyacrylique.

14. Élément de construction semi-fini selon l'une des revendications 1 à 13, dans lequel la couche de mortier composite déposée sur la plaque de verre possède, d'une part, une proportion de dérivé de l'acide polyacrylique et, d'autre part, une épaisseur de revêtement telles que la couche de mortier composite épousé sans se fissurer les dilatations thermiques de la plaque de verre.
